# EUROPEAN PATENT APPLICATION

(11) **EP 4 679 178 A1**
(43) Date of publication of application: **14.01.2026**
(21) Application number: 25182940.4
(22) Date of filing: 16.06.2025
(51) Int. Cl.: G03G 15/00, H04N 1/00, H04N 1/23

(54) **IMAGE PROCESSING APPARATUS AND METHOD FOR CONTROLLING THE SAME**

(30) Priority: 09.07.2024 JP 2024110602
(71) Applicant: CANON KABUSHIKI KAISHA, Tokyo 146-8501 (JP)
(72) Inventor: AIZONO, Keisuke, Tokyo, 146-8501 (JP)
(74) Representative: Canon Europe Limited

(57) **Abstract**

A mechanism selects a sheet holding unit storing a sheet having a length equal to or larger than a predetermined value in the main scanning direction at the time of printing from among a plurality of sheet holding units storing a plurality of sheets, thus improving convenience in printing an adjustment image. A method for controlling an image processing apparatus includes determining whether a length of a sheet stored in each of a plurality of sheet holding units in a main scanning direction at a time of printing is equal to or larger than a predetermined value, selecting at least one sheet holding unit from among sheet holding units determined to be storing a sheet having a length equal to or larger than the predetermined value, conveying a sheet from the or one of the selected sheet holding unit, and printing an adjustment image on the conveyed sheet.

## Description

### BACKGROUND

### Field of the Technology

The present invention relates to an image processing apparatus, and a method for controlling the image processing apparatus.

### Description of the Related Art

Conventionally, when an image forming apparatus for printing an image on a sheet prints an image having uniform density patterns, color shading (print density nonuniformity) may occur depending on the position in the direction perpendicularly intersecting with the sheet conveyance direction (main scanning direction in printing). Examples of causes of this phenomenon include the unevenness in the drum shape and electrical resistance of a laser-beam printer.

To reduce such print density nonuniformity, a known function corrects an image depending on the position in the main scanning direction. Examples of known image correction methods include a method for printing an adjustment image (test page) and setting correction values through user's visual determination, and a method for reading an adjustment image with a scanner and correcting the image.

A method discussed in Japanese Patent Application Laid-Open No. 2023-72532 issues a message for promoting a user to set a sheet suitable for adjustment in a sheet holding unit if the sheet holding unit stores no sheet suitable for adjustment.

The user desires that an acceptable sheet to be used to print an adjustment image is automatically selected even if the user does not explicitly select any sheet holding unit.

There are sheets of user-defined sizes in addition to sheets of regular sizes. A conventional function automatically selects an acceptable sheet to be used to print an adjustment image even if the user does not explicitly select any sheet holding unit, but does not automatically select any user-defined size sheet.

This is because user-defined size sheets have various sizes. If a sheet to be used for printing is too small, an adjustment image having a size required for adjustment does not fit into the sheet, resulting in degraded accuracy in image adjustment.

### SUMMARY

According to a first aspect of the present invention, there is provided an image processing apparatus as specified in claims 1 to 11. According to a second aspect of the present invention, there is provided a method for controlling an image processing apparatus as specified in claim 12.

Features of the present disclosure will become apparent from the following description of embodiments with reference to the attached drawings. The following description of embodiments are described by way of example.

### BRIEF DESCRIPTION OF THE DRAWINGS

Fig. 1 is a block diagram illustrating a configuration of an image forming apparatus.
Fig. 2 is a cross-sectional view illustrating a configuration of the image forming apparatus.
Fig. 3A illustrates an example of a density nonuniformity correction menu screen. Fig. 3B illustrates an example of a visual correction screen. Fig. 3C illustrates an example of a test page setting screen. Fig. 3D illustrates an example of a test page printing screen. Fig. 3E illustrates an example of an automatic paper selection priority setting screen.
Fig. 4 illustrates an example of a printed test page.
Fig. 5 is a flowchart illustrating processing for displaying a test page setting screen.
Figs. 6A and 6B are a flowchart illustrating processing for printing a test page.

### DESCRIPTION OF THE EMBODIMENTS

Embodiments of the present invention will be described in detail below with reference to the accompanying drawings. The following embodiments do not limit the present invention set forth in the scope of the appended claims. Not all of the combinations of the features described in the embodiments are indispensable to the solutions for the present invention.

In each drawing, identical members are assigned the same reference numerals, and duplicated descriptions thereof will be omitted.

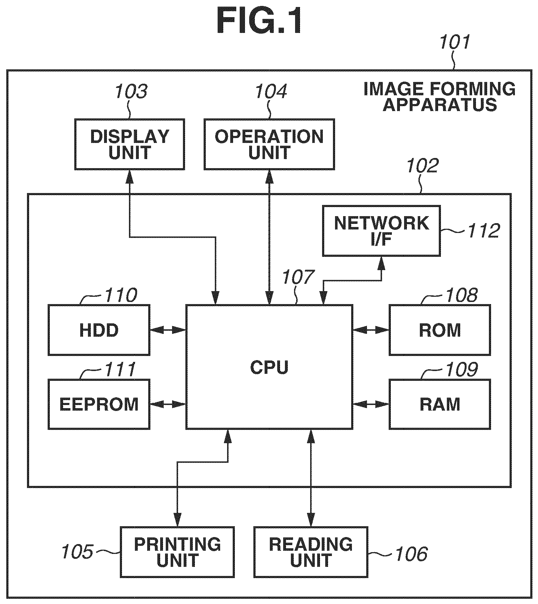

Fig. 1 is a block diagram illustrating a configuration of an image forming apparatus as an example of an image processing apparatus.

An image forming apparatus 101 includes a control unit 102, a display unit 103, an operation unit 104, a printing unit 105, and a reading unit 106.

The control unit 102 includes a Central Processing Unit (CPU) 107, a Read Only Memory (ROM) 108, a Random Access Memory (RAM) 109, a Hard Disk Drive (HDD) 110, an Electrically Erasable and Programmable Read Only Memory (EEPROM) 111, and a network interface (I/F) 112.

The CPU 107 totally controls the image forming apparatus 101. The CPU 107 is execution entity of a control program built in the image forming apparatus 101. The CPU 107 controls the operation of an apparatus connected to the control unit 102, via each I/F and a memory as a storage medium.

The ROM 108 is a read only memory for storing the boot program required for system activation and other programs.

The RAM 109 is a volatile memory that serves as a work memory required by the CPU 107 to execute a control program.

The HDD 110 is a storage medium such as a magnetic disk for storing control programs and image data.

The EEPROM 111 is a non-volatile memory for storing setting values required to execute a control program. The EEPROM 111 also stores print density nonuniformity adjustment values (described below).

The display unit 103 includes a light emitting diode (LED) or a liquid crystal display that display user operations and internal information about the apparatus.

The operation unit 104 includes a plurality of hardware keys and a touch panel formed of a touch panel sheet stuck on the liquid crystal display of the display unit 103, and accepts user operations via these members.

The printing unit 105 is a print engine that accepts a print instruction from the control unit 102 and prints image data sent therefrom on paper (sheet).

The reading unit 106 is a scanner that accepts a read instruction from the control unit 102, reads a document to generate image data, and sends the generated image data to the control unit 102. The reading unit 106 may be provided with an Auto Document Feeder (ADF) (not illustrated) and have a mechanism for conveying each of a plurality of document sheets set on the ADF one by one and reading the conveyed document.

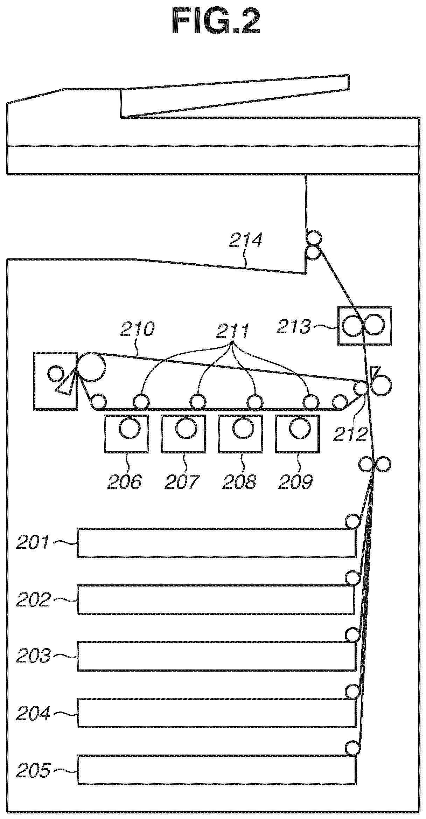

Fig. 2 is a cross-sectional view illustrating a configuration of the image forming apparatus 101. A sequence including feeding paper from the paper feed unit, performing printing, and discharging the paper to the sheet discharge unit will be described below.

Paper to be used for printing is set to a paper feed unit 201 to a paper feed unit 205. The paper feed units 201 to 205 are also referred to as paper holding units, paper storage units, sheet holding units, or sheet storage units. A plurality of sheets of different sizes and types is set in these paper feed units. Any type of paper can be set in each paper feed unit as long as printing can be performed by the printing unit 105. The present embodiment will be described below centering on a configuration in which the image forming apparatus 101 is provided with five paper feed units. The number of paper feed units is not limited to five but may be two or more. The image forming apparatus 101 may be provided with an external paper feed unit from which a sheet is conveyed. The paper feed units 201 to 205 may include a manual feed tray of the image forming apparatus 101.

A drum unit (Y) 206, a drum unit (M) 207, a drum unit (C) 208, and a drum unit (K) 209 include a photosensitive drum for yellow, a photosensitive drum for magenta, a photosensitive drum for cyan, and a photosensitive drum for black, respectively. The image forming apparatus 101 develops an image by irradiating the photosensitive drums with laser beams according to the image data transmitted from the control unit 102 and then applies toners to the drums. After the development, the CPU 107 transfers toners of different colors to an intermediate transfer belt 210 by using a primary transfer roller 211. Then, the CPU 107 transfers toners to a sheet fed from one of the paper feed units 201 to 205, by using a secondary transfer roller 212. After the toner transfer, the CPU 107 fixes the toners to the sheet with heat and pressure by using a fixing unit 213, and discharges the sheet to a discharge unit 214.

Thus, a print product corresponding to the image data transmitted from the control unit 102 is obtained. However, density nonuniformity (density unevenness) may occur depending on the position on the paper in the direction perpendicular to the sheet conveyance direction (main scanning direction in printing). This phenomenon is caused by the unevenness in the drum shape and electrical resistance.

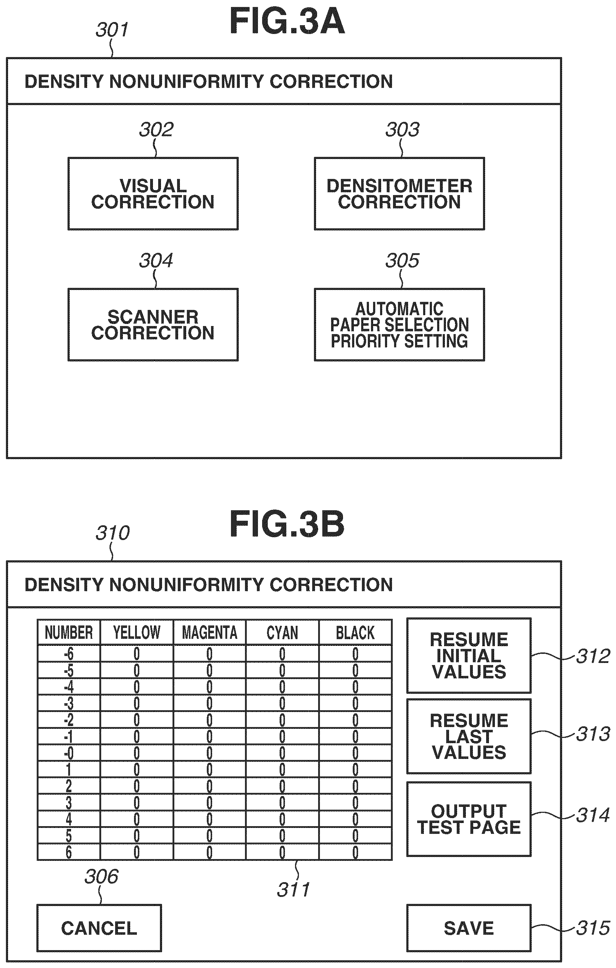

A user operation sequence for correcting the density uniformity in the main scanning direction will be described below with reference to Figs. 3A to 3E illustrating screens displayed on the display unit 103. The user performs operations via the operation unit 104 while monitoring these screens.

Fig. 3A illustrates an example of a density nonuniformity correction menu screen. A Density Nonuniformity Correction menu screen 301 includes a Visual Correction button 302, a Densitometer Correction button 303, a Scanner Correction button 304, and an Automatic Paper Selection Priority Setting button 305.

The Visual Correction button 302 is used to output the test page for correction (adjustment image) and allow the user to correct the image while visually checking the test page. Specific processing sequences will be described below with reference to Figs. 3B to 3D.

The Densitometer Correction button 303 and the Scanner Correction button 304 are used to output the test page for correction, to read the density by using a densitometer or scanner, and to perform correction.

These correction methods commonly output the test page for correction, and the test page output sequence is similar to the visual correction sequence. In the densitometer correction, the CPU 107 reads an image printed on a sheet and corrects the image by using a measurement unit (not illustrated). In the scanner correction, the reading unit 106 reads the output test page, and the CPU 107 corrects the image. The correction method after test page output is not limited thereto as long as the method outputs the test page for correction and corrects the image.

The visual correction will be described below with reference to Fig. 3B.

Fig. 3B illustrates an example of a visual correction screen displayed on the display unit 103 upon depression of the Visual Correction button 302 in Fig. 3A.

The visual correction screen 310 includes an adjustment value input field 311, a "Resume Initial Values" button 312, a "Resume Last Values" button 313, an Output Test Page button 314, a Save button 315, and a Cancel button 316.

The adjustment value input field 311 is used by the user after test page output to visually check the test page and input the print density nonuniformity adjustment values.

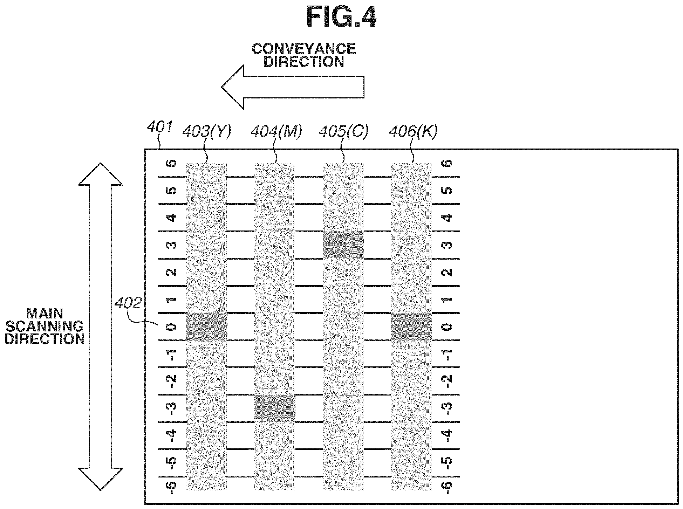

The relation with a test chart will be described below with reference to Fig. 4. Each adjustment value is a combination of the color and the position. The user can operate the operation unit 104 to input an adjustment value (numerical value) from -127 to +127 to the "-6" to "+6" rows in the Yellow column. For example, if the user touches the "+3" row in the Yellow column, a numerical value input screen (not illustrated) appears together with a software keyboard, allowing the user to input a numerical value by selecting the software keyboard. The user can input a numerical value for magenta, cyan, and black in a similar way. The input adjustment values are stored in the EEPROM 111.

The "Resume Initial Values" button 312 is used to resume the adjustment values at the time of shipment.

The "Resume Last Values" button 313 is used to resume the adjustment values last stored.

The Output Test Page button 314 is used to output a test page. The test page output will be described in detail below.

The Save button 315 is used to confirm the values input in the adjustment value input field 311. When the Save button 315 is pressed, the CPU 107 stores the adjustment values input in the adjustment value input field 311 in the EEPROM 111, calculates correction information for correcting the density nonuniformity, and also stores the correction information in the EEPROM 111. The correction information is calculated such that a negative (-) adjustment value decreases the density and a positive (+) adjustment value increases the density. Then, the voltage in each piece of print processing illustrated in Fig. 2 is corrected based on the correction information. As a result, the density at the position in the main scanning direction changes.

The Cancel button 316 is used to cancel the visual correction. When the Cancel button 316 is pressed, the CPU 107 cancels the values input in the adjustment value input field 311 and displays the Density Nonuniformity Correction menu screen 301 on the display unit 103.

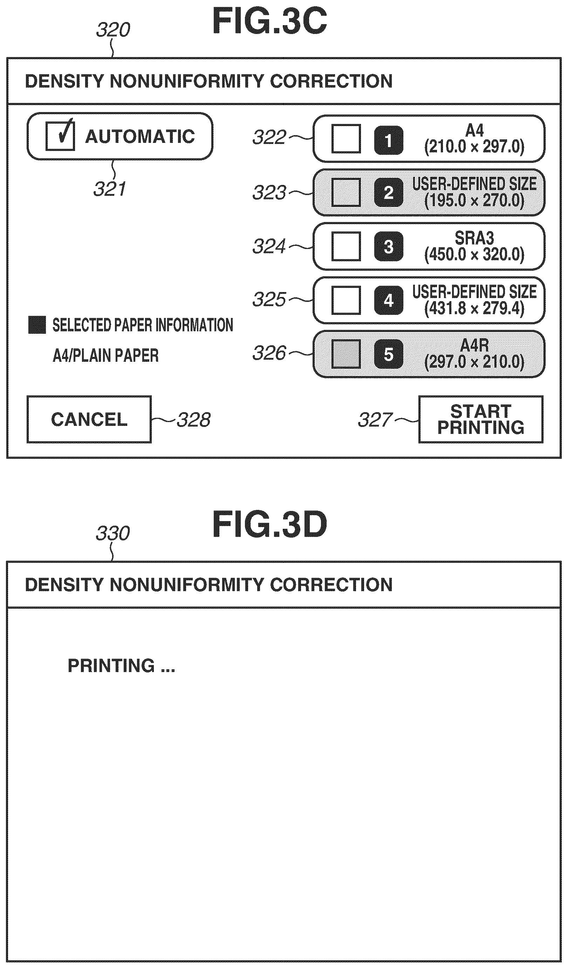

Then, the setting of the test page output will be described below with reference to Fig. 3C. The screen in Fig. 3C, an example of a test page setting screen, appears on the display unit 103 upon depression of the Output Test Page button 314.

The test page setting screen 320 includes an Automatic selection button 321, a paper feed unit 1 selection button 322 to a paper feed unit 5 selection button 326, a Start Printing button 327, and a Cancel button 328.

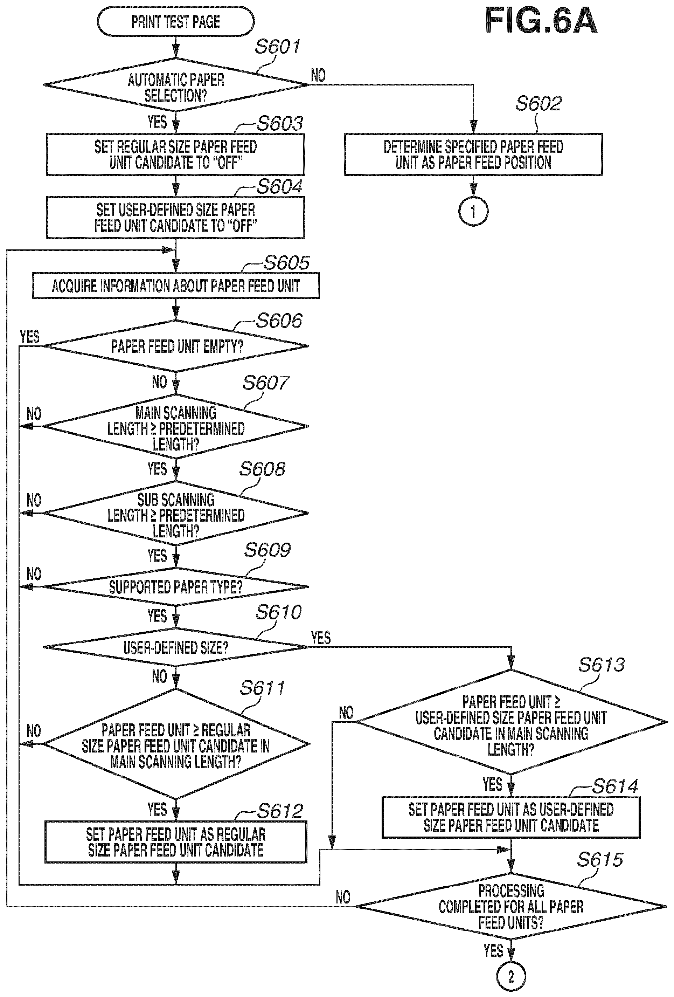

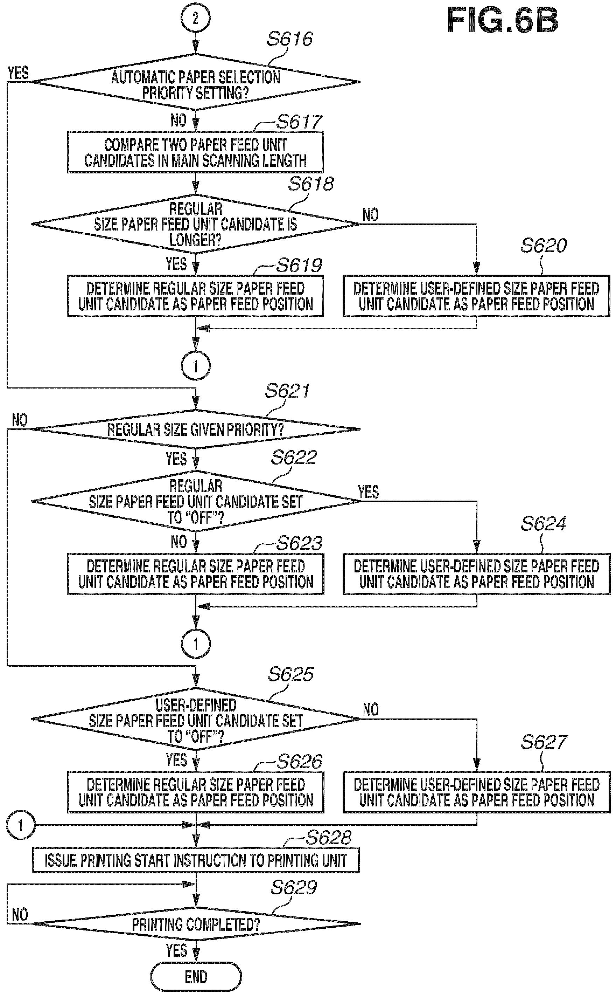

The Automatic selection button 321 is used when the user specifies no specific paper feed unit. In this case, the CPU 107 selects the most suitable paper feed unit. The processing will be described in detail below with reference to Figs. 6A and 6B.

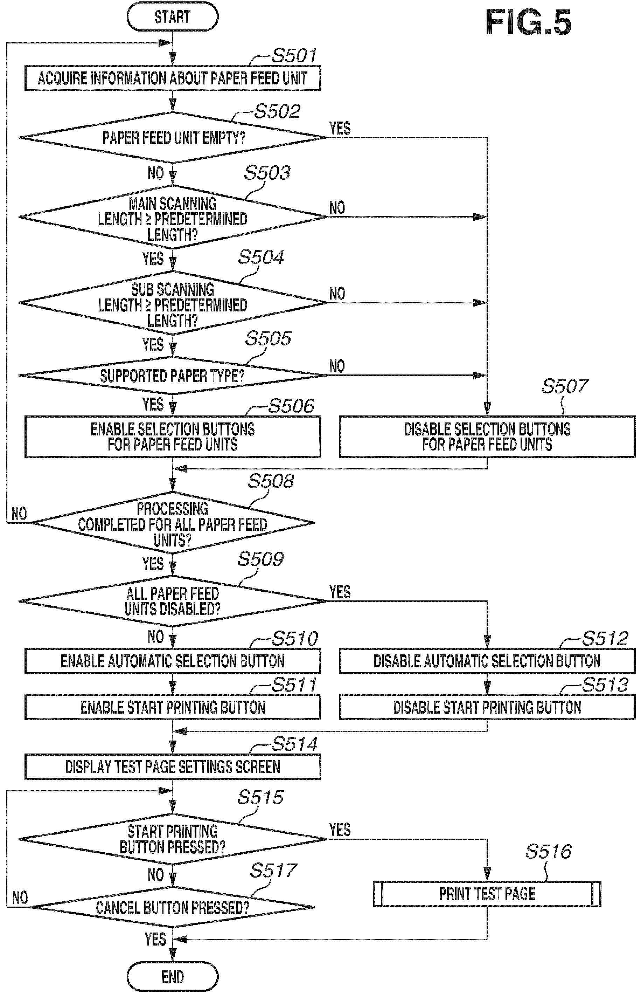

The paper feed unit 1 selection button 322 to the paper feed unit 5 selection button 326 correspond to the paper feed units 201 to 205, respectively, and are used to specify a paper feed unit by the user. If a certain paper feed unit is unusable as a result of the processing in Fig. 5 (described below), the selection button of the paper feed unit is in a grayed-out state or disabled.

The Cancel button 328 is used to cancel the start of test page printing. When the Cancel button 328 is pressed, the visual correction screen 310 appears on the display unit 103.

The Start Printing button 327 is used to start test page printing. A specific printing processing sequence will be described below with reference to Fig. 5 and Figs. 6A and 6B. During execution of printing, the CPU 107 instructs the display unit 103 to display a test page printing screen 330 illustrated in Fig. 3D. After completion of printing, the CPU 107 instructs the display unit 103 to display the visual correction screen 310. This completes the user operation sequence.

An automatic paper selection priority setting will be described below. The automatic paper selection priority setting refers to a setting about which sheet is to be preferentially selected in test page printing in a case where the Automatic selection button 321 is selected in the test page setting screen 320.

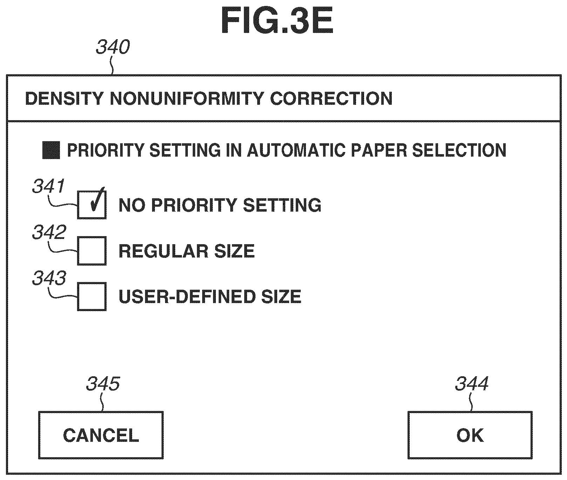

Fig. 3E illustrates an example of an automatic paper selection priority setting screen that appears when the Automatic Paper Selection Priority Setting button 305 is pressed in the Density Nonuniformity Correction menu screen 301.

A priority setting screen 340 includes a No Priority Setting 341, a Regular Size priority setting 342, a User-defined Size priority setting 343, an OK button 344, and a Cancel button 345. These priority settings are stored in the EEPROM 111 and referenced in a case where both regular size and user-defined size paper usable for a test page for correction are stored in the paper feed units 201 to 205.

In the No Priority Setting 341, the CPU 107 selects the paper feed unit storing the paper having the largest size in the main scanning direction regardless of the regular and user-defined sizes from among the paper feed units usable for a test page.

For the Regular Size priority setting 342, the CPU 107 selects the paper feed unit storing the regular size paper having the largest size in the main scanning direction from among the paper feed units usable for a test page. If no paper feed unit stores the regular size paper, the CPU 107 selects the paper feed unit storing the user-defined size paper having the largest size in the main scanning direction.

In the User-defined Size priority setting 343, the CPU 107 selects the paper feed unit storing the user-defined size paper having the largest size in the main scanning direction from among the paper feed units usable for a test page. If no paper feed unit stores the user-defined size paper, the CPU 107 selects the paper feed unit storing the regular size paper having the largest size in the main scanning direction.

These settings enable selecting paper from among the paper types highly likely to be used by the user.

The OK button 344 is used to confirm the automatic paper selection priority setting. When the OK button 344 is pressed, the CPU 107 stores the priority setting value in the EEPROM 111 and displays the Density Nonuniformity Correction menu screen 301 on the display unit 103.

The Cancel button 345 is used to cancel the automatic paper selection priority setting. When the Cancel button 345 is pressed, the CPU 107 displays the Density Nonuniformity Correction menu screen 301 without reflecting the settings in Fig. 3E.

The contents of a printed test page will be described below with reference to Fig. 4.

Fig. 4 illustrates an example of a printed test page. A test page 401 includes a position number 402, a band pattern (Y) 403, a band pattern (M) 404, a band pattern (C) 405, and a band pattern (K) 406. Y denotes a yellow toner, M denotes a magenta toner, C denotes a cyan toner, and K denotes a black toner.

A toner is an example of a recording agent and may be ink.

The band patterns of the four different colors extend in the main scanning direction. The position number 402 (scale) is printed to identify the position in the main scanning direction. The position number of the center position is 0. The position number increases at fixed intervals with increasing distance from the center. The main scanning direction refers to the direction perpendicular to the test page conveyance direction when the test page in Fig. 4 is set in a paper cassette. The combination of the color and position corresponds to the adjustment value input field 311 in the visual correction screen 310. For example, if density nonuniformity occurs at the "-3" position of the band pattern (M) 404 on the test page 401, the density nonuniformity can be corrected by changing the "-3" adjustment value of magenta in the adjustment value input field 311.

All paper types are not necessarily usable for a test page. More specifically, usable paper needs to have a predetermined length in the main scanning direction to correct density nonuniformity in the main scanning direction. Further, usable paper also needs to have a predetermined length in the sub scanning direction to print a plurality of band patterns. According to the present embodiment, paper usable for a test page needs to have a length of 270.0 mm or more in the main scanning direction and 210.0 mm or more in the sub scanning direction.

Paper types (plain paper, thick paper, coated paper, recycled paper, etc.) may be limited to enable accurately detecting density nonuniformity. According to the present embodiment, plain paper, thick paper, and coated paper are usable for a test page. On the other hand, recycled paper is unusable for a test page.

The paper size and paper type are not limited to the values according to the present embodiment but may be changed depending on the capability and characteristics of the image forming apparatus 101.

A method for determining the paper feed unit to be used for a test page will be described below with reference to two different flowcharts. An example case where the following paper is set in the paper feed units 201 to 205 will be described below. The size notations in the parentheses denote the length in the sub scanning direction by the length in the main scanning direction.

Sheet feed unit 201: A4 (210.0 mm × 297.0 mm) / Plain paper / Paper set Sheet feed unit 202: User-defined size (195.0 mm × 270.0 mm) / Plain paper / Paper set Sheet feed unit 203: SRA3 (450.0 mm × 320.0 mm) / Thick paper / Paper set Sheet feed unit 204: User-defined size (431.8 mm × 279.4 mm) / Coated paper / Paper set Sheet feed unit 205: A4R (297.0 mm × 210.0 mm) / Recycled paper / Paper set

Fig. 5 is a flowchart illustrating processing for displaying the test page setting screen 320. This processing is started when the Output Test Page button 314 is pressed. This processing is implemented when the CPU 107 loads a control program stored in the ROM 108 into the RAM 109 and then executes the program.

In step S501, the CPU 107 acquires paper feed unit information about a certain paper feed unit from the printing unit 105.

In step S502, the CPU 107 determines whether the paper feed unit is empty. If the paper feed unit is empty (YES in step S502), the processing proceeds to step S507. In step S507, the CPU 107 disables the paper feed unit selection button of the paper feed unit in the test page setting screen 320. In this example case, since paper is set in the paper feed units 201 to 205 (i.e., none of these units is empty) (NO in step S502), the processing proceeds to step S503 for all of the paper feed units 201 to 205.

In step S503, the CPU 107 determines whether the paper stored in the paper feed unit has a length equal to or larger than a predetermined value (270.0 mm) in the main scanning direction. The main scanning direction of paper is the direction parallel to the leading-edge side of the paper conveyed from a paper feed unit. If the paper length in the main scanning direction is less than 270.0 mm (NO in step S503), the processing proceeds to step S507. Referring to the example in Fig. 3C, since the paper stored in the paper feed unit 205 has a length less than 270.0 mm in the main scanning direction, the paper feed unit 5 selection button 326 is disabled.

In step S504, the CPU 107 determines whether the paper stored in the paper feed unit has a length equal to or larger than a predetermined value (210 mm) in the sub scanning direction. If the paper length is less than 210.0 mm (NO in step S504), the processing proceeds to step S507. Referring to the example in Fig. 3C, since the paper stored in the paper feed unit 202 has a length less than 210.0 mm in the sub scanning direction, the paper feed unit 2 selection button 323 is disabled.

In step S505, the CPU 107 determines whether the paper stored in the paper feed unit is of a paper type usable for a test page (plain paper, thick paper, or coated paper). If the paper feed unit stores paper of a paper type unusable for a test page (NO in step S505), the processing proceeds to step S507. Referring to the example in Fig. 3C, since all of the paper feed units 201, 203, and 204 satisfying the conditions of steps S503 and S504 store paper of printable paper types (YES in step S505), the processing proceeds to step S506.

In step S506, the CPU 107 enables some of the paper feed unit selection buttons 322 to 326 corresponding to the paper feed units in the test page setting screen 320. Referring to the example in Fig. 3C, the paper feed unit 1 selection button 322, the paper feed unit 3 selection button 324, and the paper feed unit 4 selection button 325 are enabled.

In step S508, the CPU 107 repeats the processing in steps S501 to S507 for all of the paper feed units.

In step S509, the CPU 107 determines whether all of the paper feed unit selection buttons 322 to 326 are disabled. If the CPU 107 determines that all of the buttons are disabled, i.e., none of the paper feed units is usable (YES in step S509), the processing proceeds to step S512. In step S512, the CPU 107 disables the Automatic selection button 321. In step S513, the CPU 107 disables the Start Printing button 327 to prevent the start of printing. If at least one of the paper feed unit selection buttons 322 to 326 is enabled (NO in step S509), the processing proceeds to step S510. In step S510, the CPU 107 enables the Automatic selection button 321. In step S511, the CPU 107 enables the Start Printing button 327.

In step S514, the CPU 107 displays the test page setting screen 320 with the processing in steps S501 to S513 reflected thereon on the display unit 103.

In step S515, the CPU 107 determines whether the Start Printing button 327 is pressed. If the Start Printing button 327 is pressed (YES in step S515), the processing proceeds to step S516. In step S516, the CPU 107 instructs the printing unit 105 to print the test page. Processing for printing the test page will be described in detail below with reference to Figs. 6A and 6B. After completion of printing, the processing exits the flowchart.

If the Start Printing button 327 is not pressed (NO in step S515), the processing proceeds to S517. In step S517, the CPU 107 determines whether the Cancel button 328 is pressed. If the CPU 107 determines that the Cancel button 328 is pressed (YES in step S517), the processing exits the flowchart. If the CPU 107 determines that that the Cancel button 328 is not pressed (NO in step S517), the processing returns to step S515. In step S515, the CPU 107 waits until the Start Printing button 327 or the Cancel button 328 is pressed.

This completes the description of the flowchart for the test page setting screen 320. If a plurality of paper feed units stores user-defined size paper, the series of processes makes it easier for the user to determine the paper feed unit to be used for a test page for correction, by monitoring the screen 320.

Processing for printing the test page will be described below. Figs. 6A and 6B are a flowchart illustrating the processing for printing the test page. This processing is implemented when the CPU 107 reads a control program stored in the ROM 108 into the RAM 109 and then executes the program.

In step S601, the CPU 107 determines whether the Automatic selection button 321 is selected or whether any one of the paper feed unit selection buttons 322 to 326 is selected in the test page setting screen 320.

If the CPU 107 determines that one of the paper feed unit selection buttons 322 to 326 is selected (NO in step S601), the processing proceeds to step S602. In step S602, the CPU 107 determines the specified paper feed unit as the paper feed position to be used in an actual operation. Then, in step S628, the CPU 107 issues a printing start instruction to the printing unit 105.

If the CPU 107 determines that the Automatic selection button 321 is selected (YES in step S601), the processing proceeds to step S603. In step S603 and subsequent steps, the CPU 107 determines the paper feed position to be used in an actual operation.

In step S603, the CPU 107 sets the temporary regular size paper feed unit candidate to "OFF".

In step S604, the CPU 107 also sets the temporary user-defined size paper feed unit candidate to "OFF".

In step S605, the CPU 107 acquires paper feed unit information about a certain paper feed unit from the printing unit 105.

In step S606, the CPU 107 determines whether the paper feed unit is empty. If the paper feed unit is empty (YES in step S606), the processing proceeds to step S615. Referring to the example in Fig. 3C, since paper is set in the paper feed units 201 to 205 (i.e., none of these units is empty) (NO in step S606), the processing proceeds to step S607 for all of the paper feed units 201 to 205.

In step S607, the CPU 107 determines whether the paper stored in the paper feed unit has a length equal to or larger than the predetermined value (270.0 mm) in the main scanning direction. The main scanning direction of paper is the direction parallel to the leading-edge side of the paper when the paper is conveyed from the paper feed unit. If the paper length in the main scanning direction is less than 270.0 mm (NO in step S607), the processing proceeds to step S615. Referring to the example in Fig. 3C, since the paper stored in the paper feed unit 205 has a length less than 270.0 mm in the main scanning direction (NO in step S607), the processing proceeds to step S615 when the CPU 107 acquires the paper feed unit information about the paper feed unit 205 in step S605.

In step S608, the CPU 107 determines whether the paper stored in the paper feed unit has a length equal to or larger than a predetermined value (210 mm) in the sub scanning direction. If the paper length is less than 210.0 mm (NO in step S608), the processing proceeds to step S615. Referring to the example in Fig. 3C, since the paper stored in the paper feed unit 202 has a length less than 210.0 mm in the sub scanning direction (NO in step S608), the processing proceeds to step S615 when the CPU 107 acquires the paper feed unit information about the paper feed unit 202 in step S605.

In step S609, the CPU 107 determines whether the paper stored in the paper feed unit is of a paper type usable for a test page (plain paper, thick paper, or coated paper). If the paper feed unit stores paper of a paper type unusable for a test page (NO in step S609), the processing proceeds to step S615. Referring to the example in Fig. 3C, since all of the paper feed units 201, 203, and 204 satisfying the conditions of steps S503 and S504 store paper of printable paper types (YES in step S609), the processing proceeds to step S610.

When the CPU 107 has subjected the paper feed units 201, 203, and 204 to the processing in steps S605 to S609, the processing proceeds to step S610. In step S610, the CPU 107 determines whether the paper feed unit stores user-defined size paper or regular size paper. If the CPU 107 determines that the paper feed unit stores regular size paper (NO in step S610), the processing proceeds to step S611. Referring to the example in Fig. 3C, the paper feed units 201 and 203 are paper feed units storing regular size paper.

In step S611, the CPU 107 determines whether the length of the paper stored in the paper feed unit in the main scanning direction is larger than the length of the paper stored in the regular size paper feed unit candidate in the main scanning direction. The regular size paper feed unit candidate is set to "OFF" at the timing when the CPU 107 determines the paper feed unit 201. Therefore, in step S612, the CPU 107 sets the regular size paper feed unit candidate to "paper feed unit 201". The regular size paper feed unit candidate is set to "paper feed unit 201" when the CPU 107 determines the next paper feed unit 203. Therefore, in step S611, the CPU 107 compares the lengths of the paper stored in the paper feed units 201 and 203 in the main scanning direction (297.0 mm for the paper feed unit 201 and 320.0 mm for the paper feed unit 203). In step S612, the CPU 107 overwrites the setting of the regular size paper feed unit candidate to "paper feed unit 203" storing paper having a larger size in the main scanning direction.

If the CPU 107 determines that the paper feed unit stores user-defined size paper (YES in step S610), the processing proceeds to step S613. In this case, the paper feed unit 204 is a paper feed unit storing user-defined size paper. In step S613, the CPU 107 determines whether the length of the paper stored in the paper feed unit in the main scanning direction is larger than the length of the paper stored in the user-defined size paper feed unit candidate in the main scanning direction. The user-defined size paper feed unit candidate is set to "OFF" at the timing when the CPU 107 determines the paper feed unit 204. Therefore, in step S614, the CPU 107 sets the user-defined size paper feed unit candidate to "paper feed unit 204". In step S614, if the paper feed unit has already been set, the CPU 107 overwrites the setting of the user-defined size paper feed unit candidate to a new paper feed unit.

In step S615, the CPU 107 determines whether the processing in steps S605 to S614 is completed for all of the paper feed units. If the processing is completed for all of the paper feed units (YES in step S615), the processing proceeds to step S616. In the present case, at the timing when the processing proceeds to step S616, the regular size paper feed unit candidate is set to "paper feed unit 203", and the user-defined size paper feed unit candidate is set to "paper feed unit 204".

In step S616, the CPU 107 determines whether the automatic paper selection priority setting is made. More specifically, the CPU 107 determines whether the setting is made, based on the value specified for the automatic paper selection in the priority setting screen 340 and stored in the EEPROM 111. If No Priority Setting 341 is stored in the EEPROM 111 (NO in step S616), the processing proceeds to step S617.

In step S617, the CPU 107 compares the length of the paper stored in the paper feed unit in the main scanning direction set in step S612 with the length of the paper stored in the paper feed unit in the main scanning direction set in step S614.

In step S618, the CPU 107 determines whether the length of the paper stored in the paper feed unit of the regular size paper feed unit candidate in the main scanning direction is larger than the length of the paper stored in the paper feed unit of the user-defined size paper feed unit candidate in the main scanning direction. If the CPU 107 determines that the length of the paper stored in the paper feed unit of the regular size paper feed unit candidate in the main scanning direction is larger than the length of the paper stored in the paper feed unit of the user-defined size paper feed unit candidate in the main scanning direction (YES in step S618), the processing proceeds to step S619. In step S619, the CPU 107 determines the paper feed unit set in step S612 as the paper feed unit to be used in an actual operation. Then, in step S628, the CPU 107 issues a printing start instruction to the printing unit 105. On the other hand, if the CPU 107 determines that the length of the paper stored in the paper feed unit of the user-defined size paper feed unit candidate in the main scanning direction is larger than the length of the paper stored in the paper feed unit of the regular size paper feed unit candidate in the main scanning direction (NO in step S618), the processing proceeds to step S620. In step S620, the CPU 107 determines the paper feed unit set in step S614 as the paper feed unit to be used in an actual operation. Then, in step S628, the CPU 107 issues a printing start instruction to the printing unit 105. A case where No Priority Setting 341 is set in the example in Fig. 3C will be assumed. In this case, the CPU 107 compares the length of the paper stored in the paper feed unit 203 as the regular size paper feed unit candidate in the main scanning direction (320.0 mm) with the length of the paper stored in the paper feed unit 204 as the user-defined size paper feed unit candidate in the main scanning direction (279.4 mm). Since the length of the paper stored in the paper feed unit 203 in the main scanning direction (320.0 mm) is larger than the length of the paper stored in the paper feed unit 204, the CPU 107 determines the paper feed unit 203 as the paper feed unit to be used in an actual operation.

If the CPU 107 determines that the Regular Size priority setting 342 or the User-defined Size priority setting 343 is stored in the EEPROM 111 (YES in step S616), the processing proceeds to step S621.

If the CPU 107 determines that the Regular Size priority setting 342 is stored in the EEPROM 111 (YES in step S621), the processing proceeds to step S622.

In step S622, the CPU 107 determines whether the regular size paper feed unit candidate is set to "OFF". If the regular size paper feed unit candidate is set to other than "OFF" (NO in step S622), the processing proceeds to step S623. In step S623, the CPU 107 determines the paper feed unit set in step S612 as the paper feed unit to be used in an actual operation. Then, in step S628, the CPU 107 issues a printing start instruction to the printing unit 105. If the regular size paper feed unit candidate is set to "OFF" (YES in step S622), the processing proceeds to step S624. In step S624, the CPU 107 determines the user-defined size paper feed unit candidate as the paper feed position to be used in an actual operation. Then, in step S628, the CPU 107 issues a printing start instruction to the printing unit 105. Referring to the example in Fig. 3C, if the Regular Size priority setting 342 is set, the regular size paper feed unit candidate is set to other than "OFF". Therefore, the CPU 107 determines the paper feed unit 203 set in step S612 as the paper feed unit to be used in an actual operation.

If the CPU 107 determines that the User-defined Size priority setting 343 is stored in the EEPROM 111 (NO in step S621), the processing proceeds to step S625.

In step S625, the CPU 107 determines whether the user-defined size paper feed unit candidate is set to "OFF".

If the user-defined size paper feed unit candidate is set to other than "OFF" (NO in step S625), the processing proceeds to step S627. In step S627, the CPU 107 determines the user-defined size paper feed unit candidate as the paper feed position to be used in an actual operation. Then, in step S628, the CPU 107 issues a printing start instruction to the printing unit 105. If the user-defined size paper feed unit candidate is set to "OFF" (YES in step S625), the processing proceeds to step S626. in step S626, the CPU 107 determines the paper feed unit set in step S612 as the paper feed unit to be used in an actual operation. Then, in step S628, the CPU 107 issues a printing start instruction to the printing unit 105. Referring to the example in Fig. 3E, if the User-defined Size priority setting 343 is set, the user-defined size paper feed unit candidate is set to other than "OFF". Therefore, the CPU 107 determines the paper feed unit 204 set in step S614 as the paper feed unit to be used in an actual operation.

In the processing so far, the CPU 107 determines any one of the paper feed units 201 to 205 as the paper feed unit to be used for an actual operation. In step S628, the CPU 107 specifies the paper feed position to the printing unit 105 and instructs the printing unit 105 to print the test page.

In step S629, the CPU 107 waits until printing is completed. Upon reception of a printing completion signal from the printing unit 105, the processing exits this flowchart.

This completes the description of the flowchart illustrating the processing for printing the test page. Even if a plurality of paper feed units stores user-defined size paper, the series of processes makes it possible to suitably determine the paper feed unit to be used for a test page for correction by specifying automatic paper selection.

These embodiments allow the selection of the sheet holding unit storing the sheet suitable to print the adjustment image from among a plurality of sheet holding units storing a plurality of sheets including user-defined size paper, thus improving convenience.

### <Other Embodiments>

Although, in the above-described the embodiments, the CPU 107 performs the determinations in steps S503 to S505, the CPU 107 does not necessarily need to perform all of these determinations. For example, the CPU 107 may perform the determination only in step S503 out of steps S503 to S505. If the result of the determination in step S503 is YES, the CPU 107 may perform the processing in step S506.

The CPU 107 may perform the determination only in step S504 out of steps S503 to S505. If the result of the determination in step S504 is YES, the CPU 107 may perform the processing in step S506. The CPU 107 may perform the determination only in step S505 out of steps S503 to S505. If the result of the determination in step S505 is YES, the CPU 107 may perform the processing in step S506.

Although the CPU 107 performs the determinations in steps S607 to S609, the CPU 107 does not necessarily need to perform all of these determinations. For example, the CPU 107 may perform the determination only in step S607 out of steps S607 to S609. If the result of the determination in step S607 is YES, the CPU 107 may perform the processing in step S610. The CPU 107 may perform the determination only in step S608 out of steps S607 to S609. If the result of the determination in step S608 is YES, the CPU 107 may perform the processing in step S610. The CPU 107 may perform the determination only in step S609 out of steps S607 to S609. If the result of the determination in step S609 is YES, the CPU 107 may perform the processing in step S610.

Although the above-described embodiments are based on a case of visual correction, the CPU 107 may perform the above-described processing when outputting the test page in densitometer correction and scanner correction.

Although the above-described embodiments are based on a case of print density nonuniformity adjustment, the embodiments may also be applied to other adjustments such as printing position adjustment and the like. In the case of printing position adjustment, the CPU 107 outputs a test chart for adjusting the printing position, reads a mark printed on the test chart via the reading unit 106, and corrects the printing position. Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present invention is not limited to the disclosed embodiments but is defined by the scope of the following claims.

## Claims

1. An image processing apparatus comprising:
a control means (107) configured to:
determine whether a length of a sheet stored in each of a plurality of sheet holding means (201-205) in a main scanning direction at a time of printing is equal to or larger than a predetermined value;
select at least one sheet holding means from among sheet holding means determined to be storing a sheet having a length equal to or larger than the predetermined value;
control a conveyance means to convey a sheet from the or one of the selected sheet holding means; and
control a printing means to print an adjustment image on the sheet conveyed by the conveyance means.

2. The image processing apparatus according to claim 1, wherein the main scanning direction is a direction perpendicular to a sheet conveyance direction.

3. The image processing apparatus according to claim 1 or 2, wherein the main scanning direction is a direction parallel to a side at a leading edge of the sheet in a sheet conveyance direction.

4. The image processing apparatus according to any one of the preceding claims, wherein the control means (107) is further configured to determine whether a length of the sheet stored in each of the plurality of sheet holding means (201-215) in a sub scanning direction is equal to or larger than another predetermined value, and select the at least one sheet holding means from among the sheet holding means determined to be storing a sheet having a length in the sub scanning direction determined to be equal to or larger than the another predetermined value.

5. The image processing apparatus according to any one of the preceding claims, wherein the control means (107) is further configured to determine whether a sheet type stored in each of the plurality of sheet holding means is a predetermined type, and select the at least one sheet holding means from among sheet holding means storing a sheet type determined to be the predetermined type.

6. The image processing apparatus according to any one of the preceding claims, wherein the control means is configured to, in a case where a plurality of sheet holding means are selected, control the conveyance means to convey a sheet from the sheet holding means storing the sheet having a largest size of a side at a leading edge of the sheet in a sheet conveyance direction from among the plurality of sheet holding means.

7. The image processing apparatus according to any one of claims 1 to 5, wherein the control means is configured to, in a case where a plurality of sheet holding means are selected, receive a user input and control the conveyance means to convey a sheet from one of the selected sheet holding means according to the user input.

8. The image processing apparatus according to any one of the preceding claims,
wherein the plurality of sheet holding means includes a first sheet holding means storing regular size paper and a second sheet holding means storing user-defined size paper, and
wherein the image processing apparatus is configured to accept from a user a setting for determining which of a sheet holding means storing regular size paper and a sheet holding means storing user-defined size paper is to be preferentially selected.

9. The image processing apparatus according to any one of the preceding claims, wherein the adjustment image is a density adjustment image.

10. The image processing apparatus according to any one of the preceding claims, wherein the adjustment image includes images of different recording agents having different colors in a sheet conveyance direction, and a scale indicating a distance from a center in a direction perpendicular to the sheet conveyance direction.

11. The image processing apparatus according to claim 10, further comprising a display means for displaying a screen for accepting a density adjustment value for each step of the scale and for each recording agent.

12. A method for controlling an image processing apparatus, the method comprising:
determining whether a length of a sheet stored in each of a plurality of sheet holding means (201-205) in a main scanning direction at a time of printing is equal to or larger than a predetermined value;
selecting at least one sheet holding means from among sheet holding means determined to be storing a sheet having a length equal to or larger than the predetermined value;
conveying a sheet from the or one of the selected sheet holding means; and
printing an adjustment image on the conveyed sheet.
